# NEW EUROPEAN PATENT SPECIFICATION

(11) **EP 2 236 283 B2**
(45) Date of publication and mention of the opposition decision: **19.04.2017**
(45) Mention of the grant of the patent: 14.08.2013
(21) Application number: 08703791.7
(22) Date of filing: 24.01.2008
(51) Int. Cl.: B32B 27/00, B05D 7/24, B32B 15/08, C09D 1/04, C09D 5/00, C09D 5/10, C23C 26/00, B05D 7/00

(54) **MEMBER WITH CORROSION-RESISTANT COATING FILM, PROCESS FOR PRODUCTION OF THE SAME, AND COATING COMPOSITION FOR THE PRODUCTION THEREOF**
GLIEDER MIT EINEM KORROSIONSBESTÄNDIGEN BESCHICHTUNGSFILM, VERFAHREN ZU DESSEN HERSTELLUNG UND BESCHICHTUNGSZUSAMMENSETZUNG FÜR DESSEN HERSTELLUNG
ÉLÉMENT À FILM DE REVÊTEMENT RÉSISTANT À LA CORROSION, SON PROCÉDÉ DE PRODUCTION, ET COMPOSITION DE REVÊTEMENT POUR SA PRODUCTION

(43) Date of publication of application: 06.10.2010
(60) Divisional application: 13161390.3
(73) Proprietor: Yuken Industry Co., Ltd., Aichi 448-8511 (JP)
(72) Inventor: SUZUKI, Toshimichi, Aichi, 448-8511 (JP); IIJIMA, Masayuki, Aichi, 448-8511 (JP); TAKAYAMA, Yasuharu, Aichi, 448-8511 (JP)
(74) Representative: Müller-Boré & Partner Patentanwälte PartG mbB
(86) International application number: PCT/JP2008/050963
(87) International publication number: WO 2009/093318

(56) References cited:
- EP-A1- 2 246 396
- EP-A2- 1 233 043
- WO-A1-01/85854
- WO-A1-01/85854
- WO-A1-99/51793
- WO-A1-03/085171
- WO-A1-2005/078026
- WO-A1-2007/077130
- DE-A1- 3 432 118
- DE-A1- 19 814 605
- DE-A1-102005 037 611
- DE-A1-102005 042 899
- DE-T2- 69 606 471
- DE-T2- 69 823 847
- FR-A- 1 604 283
- JP-A- 11 058 599
- JP-A- 2002 115 084
- JP-A- 2006 028 372
- JP-T- 2004 501 233
- KR-A-020060 074 296
- US-A- 3 469 071
- US-A- 3 721 574
- US-A- 3 721 574
- US-A- 3 917 648
- US-A- 4 224 213
- US-A- 4 479 824
- US-A- 4 479 824
- US-A1- 2006 086 281

## Description

### Technical Field

The present invention relates to a member having an anticorrosive coating which does not contain a hazardous metal such as chromium, a method of manufacturing the member, and a paint composition for manufacturing the member. More specifically, the present invention relates to a member having a coating which has excellent anticorrosive properties and which is thin enough to be applied to a steel plate for press molding used for, for example, a precision apparatus or a vehicle, a method for manufacturing the member, and a paint composition for manufacturing the member.

### Background art

An anticorrosive paint mainly containing a zinc powder and chromic acid had been much used as a paint to control corrosion of a member having a metallic surface such as a steel member. This paint has superior storage stability because the paint can keep the zinc powder stable for a long period and because of a passivation effect that hexavalent chromium provides. In addition, a coating formed from a paint having a zinc powder prevents corrosion of a metal substrate such as steel because of the known effect of zinc of providing sacrificial protection. Therefore, the coating exhibits excellent rust-proof properties.

However, there has recently been concern of environmental pollution and health damage to the human body caused by the toxicity of hexavalent chromium, and a movement to impose legal restrictions on hazardous metals such as hexavalent chromium has developed. In accordance with this movement, many industries contemplate not using hazardous metals such as hexavalent chromium at all. Therefore, in the field of rust-proof paints, there is a strong desire to prepare a paint totally free from hazardous metals such as chromium.

Such rust-proof paints which do not contain chromium include paints having a zinc powder and a binder component dispersed or dissolved in a solvent, i.e. zinc-rich paints. The binder component of zinc-rich paints can be categorized as an organic type or an inorganic type. Because an inorganic binder component is superior from the viewpoint of durability, a zinc-rich paint having an inorganic binder component is used for an undercoating agent in heavy-duty coatings, such as for a ship or a bridge.

However, a coating formed from such an inorganic zinc-rich paint has a tendency to have voids therein, and it is difficult to control the thickness of the coating.

The following means have been disclosed to overcome such problems.

Patent Document 1 discloses a zinc-rich paint which additionally contains. calcium carbonate in the form of whiskers with a major axis of 20 to 30 micrometers. The added whiskers act to prevent from forming cracks in a coating of the paint.

Patent Document 2 discloses a zinc-rich paint containing an alkyl silicate resin for which the ratio of the weight-average molecular weight to the number average molecular weight is 40 or less, with the morpholine gel time of the paint being at most 60 seconds. It is explained in that document that the phenomenon of elongation of cracks and connection of cracks to voids is inhibited because the curing period of the paint is short.
Patent Document 1: JP1999-293200A
Patent Document 2: JP2004-359800A

WO 01/85854 discloses a coating composition, for use in the protection of metal surfaces, which comprises a binder, a corrosion inhibitor, and a solvent.

### Disclosure of Invention

Although the means described in the above patent documents are indeed effective for a thick coating formed from a zinc-rich paint, they cannot provide a paint that stably forms a thin coating having a thickness of about 10 micrometers and excellent anticorrosive properies.

Such a thin coating having excellent anticorrosive properies is mainly applied to office equipment, electric appliances, vehicles, and the like. Specifically, it is applied to fasteners such as bolts and nuts; attachments such as clamps and clips; and press molded parts such as plates, housings, hinges, and panels. These members are subject to strong shear stresses during their manufacture and assembly, even though they are manufactured to tight tolerances. Therefore, their coatings must have a high film strength and a high level of adhesive properties.

An effective measure for meeting the above requirement for coatings is a baking treatment at a high temperature. However, when a zinc-rich paint is subjected to baking treatment at about 300 degrees C, an organic silicon compound which functions as a binder component in the paint rapidly shrinks. Therefore, even when the means described in the above-mentioned patent documents are applied, extension of cracks in a coating formed from a zinc-rich paint cannot be stopped, and cracks occasionally extend into the substrate.

Accordingly, it is an important technological goal to provide a rust-proof paint which does not contain a hazardous metal such as chromium and is able to form a thin coating in which crack generation is inhibited even after a baking treatment at a high temperature. In this regard, one of the inventors of the present invention has already proposed a rust-proof paint comprising a solution containing a nonaqueous binder and a metal powder, the nonaqueous binder including an organic silicon compound and an organic titanium compound (Application Number: JP2006-265291). This rust-proof paint has a long pot life as well as excellent anticorrosive properties.

The object of the present invention is to provide a method of manufacturing a member having a coating, especially a thin coating, which has superior anticorrosive properties, using the above-mentioned rust-proof paint.

In order to achieve the above-described object, the inventors of the present invention first made the following investigation.

A coating formed from a zinc-rich paint is sometimes coated by another paint in order to increase anticorrosive properties. For instance, above-described Patent Document 2 discloses that a corrosion-resistant paint comprising an epoxy resin or the like may be coated on a zinc-rich paint. However, that document clearly states that any type of corrosion-resistant paints can be applied. Therefore it is implied that the corrosion-resistant paint has only an additional effect from the viewpoint of anticorrosive properties.

As described above, the manufacturing tolerances of a member to which the present invention is related are severe. Therefore, it is not acceptable for a coating on the member to be thick, and the total thickness of the coating must be thin (typically around 10 micrometers). Therefore when a corrosion-resistant paint is coated on a coating formed from a zinc-rich paint as described above, the thickness of the coating formed from the corrosion-resistant paint must be thin. As the corrosion-resistant paint is of secondary importance from the viewpoint of anticorrosive properties, adding a thin coating formed from such a corrosion-resistant paint is of little help in improving anticorrosive properties. Rather, a two-layer coating has inferior anticorrosive properties compared to a coating which has the same thickness as a two-layer coating but which is formed entirely from a zinc-rich paint because a two-layer coating comprises a layer of coating having inferior properties. Accordingly, a corrosion-resistant paint having an additional function from the viewpoint of anticorrosive properties, like that described in Patent Document 2, cannot be used for the purpose of the present invention.

Upon further study, the inventors of the present invention realized that it is possible to obtain an outstanding anticorrosive coating by a precise investigation of the characteristics of a rust-proof coating formed from the above-described rust-proof paint and by preparation of a coating which is suited to the characteristics of the rust-proof coating.

The following knowledge was acquired as a result of a diligent investigation based on the above realization. In the following description, a paint directly coated on a substrate such as a metal plate, namely, the above-described rust-proof paint, may be referred to as a base coat agent; a coating formed from the base coat agent may be referred to as a base coat; that a paint coated on the base coat, namely the above-described corrosion-resistant paint, may be called as a top coat agent; a coating formed from the top coat agent may be referred to as a top coat, and a coating consisting of the base coat and the top coat may be referred to as a combined coat.
1. (A) Although a base coat inhibits crack generation, invisible microcracks are formed on the surface of the base coat.
2. (B) When an aqueous organic-inorganic composite silicon-based agent is coated on the base coat as a top coat agent, the agent infiltrates into the microcracks.
3. (C) Therefore, when the top coat agent is hardened, a region with a varying composition is formed in a subsurface region of the base coat, where the contents of components formed from the top coat agent gradually decrease in the direction from an interface between the top coat and the base coat to inside of the base coat.
4. (D) Because of the region with a varying composition, the combined coat consisting of the base coat and top coat exhibits almost twice as good anticorrosive properties as a coating solely consisting of the basecoat.
5. (E) When an alkylalkoxysilane having a glycidyloxy functional group is used as the aqueous organic-inorganic composite silicon-based agent (below the agent may be referred to as an aqueous organic-inorganic composite silicon-based infiltration agent because the purpose of the agent is infiltrating into microcracks,) in the top coat agent, an outstanding result is achieved.

Based on the above-described knowledge, the present invention is as follows:
According to one aspect of the present invention, a member as defined in claim 1 having an anticorrosive coating (combined coat) comprises a first coating (base coat) formed from a first paint composition (base coat agent) on a metallic surface of a member by heating, having a thickness after heating process in the range of 5 to 20 micrometers, the first paint composition comprising, based on the whole composition, 10 to 35 % by weight of an organic silicon compound comprising one or more compounds selected from the group consisting of a tetraalkoxy compound and a hydrolysate of the silane compound, 0.05 to 2.0% by weight of an organic titanium compound, 30 to 50% by weight of one or more metal powders selected from the group consisting of zinc powder, zinc alloy powder, and aluminum powder, and 10 to 60% by weight of an organic solvent; and a second coating (top coat) formed from a second paint composition (top coat agent) on a surface of the first coating by heating, the second paint composition being aqueous and comprising, based on the whole composition, 5 to 25 % by weight of a silane coupling agent and 30 to 60% by weight of an alkali-silicate compound.
According to another aspect of the present invention, a method of manufacturing a member having an anticorrosive coating (combined coat) as defined in claim 9 comprises a first coating process to coat a first paint composition (base coat agent) on a metallic surface of a member, the first paint composition comprising, based on the whole composition, 10 to 35 % by weight of an organic silicon compound comprising one or more compounds selected from the group consisting of a tetraalkoxy compound and a hydrolysate of the silane compound, 0.05 to 2.0% by weight of an organic titanium compound, 30 to 50% by weight of one or more metal powders selected from the group consisting of zinc powder, zinc alloy powder, and aluminum powder, and 10 to 60% by weight of an organic solvent; a first heating process of heating the coated first paint composition at 200 to 400 degrees C to form a first coating (base coat); a second coating, process of coating a second paint composition (top coat agent) on a surface of the first coating, the second paint composition being aqueous and comprising, based on the whole composition, 5 to 25 % by weight of a silane coupling agent and 30 to 60% by weight of an alkali-silicate compound; and a second heating process of heating the coated second paint composition at 50 to 200 degrees C to form a second coating (top coat).

The present invention provides as other aspects the above-described first paint composition (base coat agent) and second paint composition (top coat agent) as paint compositions for manufacturing the above-described member having an anticorrosive coating (combined coat).

Preferred aspects of the above-described member, the method of manufacturing the member, the first paint composition, and/or the second paint composition of the present invention are the following (a) to (h):
1. (a) The organic silicon compound of the above-described first paint composition comprises one or more compounds selected from the group consisting of a tetraalkyl silicate compound having an alkyl functional group having 1 to 3 carbon atoms, and an oligomer thereof.
2. (b) The organic titanium compound of the above-described first paint composition comprises a compound having a generic formula of Ti(X)₄ and an oligomer thereof, where X represents one or more functional groups selected from the group consisting of alkoxy groups having 1 to 4 carbon atoms including methoxy, ethoxy, propoxy, isopropoxy, butoxy, isobutoxy, and tert-butoxy; chelating groups including lactate, triethanolaminate, acetylacetonate, acetoacetate, and ethylacetoacetate; and a hydroxy group.
3. (c) The metal powder of the above-described first paint composition has a scale-like form.
4. (d) The above-described second paint composition includes a wax emulsion having a content of 20% or less based on the whole composition.
5. (e) The silane coupling agent of the above-described second paint composition is a glycidyloxyalkyltrialkoxy silane.
6. (f) The alkali-silicate compound of the above-described second paint composition is a lithium-silicate compound, and the ratio of the number of moles of a lithium portion of the lithium-silicate compound in lithium oxide equivalent to the number of moles of a silicon portion of the lithium-silicate compound in silicon oxide equivalent (SiO₂/Li₂O) is 6 to 10.
7. (g) The method comprises a preheating process of heating the coated first paint composition at 80 to 200 degrees C between the first coating process and the first heating process.
8. (h) The surface on which the above-described first coating is formed is a surface of a steel member.

The combined coating of the present invention does not include a hazardous metal compound such as chromium in either the first or second coating, which relieves concern about environmental pollution and health damage to the human body.

The top coat agent infiltrates and solidifies in microcracks in the base coat to form a kind of region with a varying composition between the base coat and the top coat. Therefore an excellent anticorrosive coating is formed even though the thickness of the coating is thin.

### Best Mode for Carrying Out the Invention

Below, the base coat agent will be described as the best mode for carrying out the present invention, followed by a description of the top coat agent.

### 1. Base coat Agent

The base coat agent of the present invention includes an organic silicon compound, an organic titanium compound, a prescribed metal powder, and an organic solvent, and it optionally includes a small amount of additives.

These components, a method of preparing the base coat agent, and a method of manufacturing a base coat using the base coat agent are described below, where "%" in the following description of the base coat agent means the percentage by weight based on the whole base coat agent unless otherwise specified.

### (1) Organosilane Compound

An organosilane compound and an organic titanium compound are used for a binder component of the base coat agent of the present invention so that generation of large cracks is inhibited even in a baking treatment at a high temperature.

A tetraalkoxy silane compound such as tetramethoxysilane, tetraethoxysilane, and tetrapropoxysilane, or an oligomer of the above-described compound is used as the organic silicon compound, and a tetraalkoxy silane compound having 1 to 3 carbon atoms, or an oligomer of the above-described compound is especially preferable. When a condensation reaction of these compounds occurs, a coating having a three-dimensional cross-linked structure is formed, and this coating has an improved film strength. In addition, cracks in the coating do not readily extend because volume shrinkage during condensation is relatively small.

The content of the above-described organic silicon compound is 10 to 35 % based on the whole base coat agent. When the content is less than 5%, there is a tendency for the film strength to decrease. When the content is much lower, obvious voids occur between metal powders, which reduces anticorrosive properties. When the content is excessively more than 40%, there is a tendency for anticorrosive properties to decrease because the content of the metal powder becomes relatively low. In addition, the effect of inhibiting crack extension is deteriorated because the area of overlap between laminated metal powders becomes small.

### (2) Organic titanium Compound

The base coat of the present invention contains an organic, titanium compound to improve the properties of the combined coating. The organic titanium compound means a compound having the generic formula Ti(X)₄ and an oligomer of the above-described compound, each of the groups X, which may be identical to or different from each other, represents a functional group selected from the group consisting of a hydroxyl group, a lower alkoxy group, and a chelating group.

The lower alkoxy group means an alkoxy group having 1 to 6 carbon atoms, preferably 1 to 4 carbon atoms, including methoxy, ethoxy, propoxy, isopropoxy, butoxy, isobutoxy, and tert-butoxy groups.

The chelating group means a functional group derived from an organic compound having the ability to perform chelating, which includes a beta-diketone such as acetylacetone; an alkylcarbonylcabonic acid such as acetoacetic acid and its ester; a hydroxy acid such as lactic acid; and an alkanolamine such as triethanolamine. Specific examples of the chelating group include lactate, ammoniumlactate, triethanolaminate, acetylacetonate, acetoacetate, and ethylacetoacetate.

This organic titanium compound exhibits excellent properties when the content thereof is low as described below. Namely, when a baking treatment at a high temperature is performed on the base coat agent, the added organic titanium compound works as a hardener or a catalyst and promotes a three-dimensional cross-link reaction of the organic silicon compound. As a result, the cure rate of the binder component increases, and crack extension is inhibited.

A chemical bond between the organic silicon compound and the metal powder, and a chemical bond between the organic silicon compound and a metal at the surface of the substrate are promoted because of the organic titanium compound, and as a result, the strength of each bond is improved.

The content of the organic titanium compound is in the range of 0.05 to 2.0%. When the content is too low, the effect of adding the organic titanium compound becomes insignificant and large cracks extending to the substrate on which the base coat is formed tend to be formed. As a result, there is a tendency for the anticorrosive properties of the base coat to deteriorate. When the content is too high, the base coat agent tends to adsorb ambient moisture and be hydrolyzed. Therefore, there is a tendency for the pot life of the base coat agent to become shorter. In addition, generation of microcracks in the subsurface of the base coat, which is an important feature of the present invention, becomes difficult. A particularly preferable range is 0.1 to 2%, whereby preferable microcracks are stably formed.

### (3) Metal Powder

The metal powder included in the base coat of the present invention comprises one or more materials selected from the group consisting of zinc powder, zinc alloy powder, and aluminum powder, which are conventionally used in a zinc-rich paint. The zinc alloy includes Zn-Ni, Zn-Sn, Zn-Fe, Zn-Al, and Zn-Al-Mg.

The content of the metal powder in the base coat agent is in the range of 30 to 50%. When the content is too high, it is difficult to coat the base coat agent in the form of a thin layer, and the film strength of the base coat is deteriorated. When the content is too low, cracks tend to extend or the anticorrosive properties of the whole coating are deteriorated.

The metal powder as a component of the base coat agent preferably has a scale-like form so that the base coat has excellent anticorrosive properties even when the thickness of the base coat is thin. The scale-like form gives the metal powders in the base coat a laminated structure in the thickness direction. This laminated structure inhibits crack extension even when cracks are generated in the base coat because of shrinkage induced by the condensation of the binder component, and it prevents large cracks that expose the substrate.

It is preferable that the average thickness of the metal powder in a scale-like form be 1/200 to 1/2 of the average thickness of the base coat and that the average length of the major axis (the length of the longest part of the scale-like form) of the metal powder be 1/20 to tentimes the average thickness of the base coat. In the case, crack generation caused by baking in a heating process described below is stably inhibited even when the thickness of the coated layer varies according to the coating condition of the base coat agent. A more preferable range for the average thickness of the metal powder is 1/200 to 1/10 of the average thickness of the base coat and a particularly preferable range is 1/200 to 1/20 of the average thickness. A more preferable range for the average length of the major axis of the metal powder is 1/10 to 5 times the average thickness of the base coat and a particularly preferable range is 2/5 to two times the average thickness.

When the thickness of the base coat is around 10 micrometers for instance, the above-described preferable metal powder has an average thickness of the scale-like form of 0.05 to 5 micrometers and an average length of the major axis of 0.5 to 100 micrometers, the above-described more preferable metal powder has an average thickness of the scale-like form of 0.05 to 1 micrometers and an average length of the major axis of 1 to 50 micrometers, and the above-described especially preferable metal powder has an average thickness of the scale-like form of 0.05 to 0.5 micrometers and an average length of the major axis of 4 to 20 micrometers.

When the average thickness of the scale-like form is less than the above-described range, there is a concern that the metal powder will be broken during a mixing operation during the preparation of the base coat agent. When the metal powder is broken, the scale-like form cannot be retained, and it may be difficult to form the laminated structure. When the thickness is above the above-described range, it is hard to form a structure in which multiple metal powders are stacked in the thickness direction of the base coat, and there is a tendency for the effect of inhibiting crack extension to be reduced.

When the average length of the major axis of the metal powder is below the above-described range, it is hard to form a structure in which the scale-like metal powders are stacked in the base coat, and there is a tendency for the effect of inhibiting crack extension to be reduced. When the length is above the above-described range, the distribution of the metal powder in the base coat may become deficient.

When the metal powder of the base coat agent comprises different types of metal powders, the ratio of components of the metal powder is not particularly limited. However, it is preferable for the metal powder to contain a zinc powder or a zinc alloy powder when anticorrosive properties are important. Even when it is advantageous to increase the ratio of an aluminum powder from the viewpoint of appearance, it is preferable to contain a zinc powder or a zinc alloy powder from the viewpoint of anticorrosive properties.

### (4) Organic Solvent

When the base coat agent contains an organic solvent during a coating operation, a coating having excellent adhesive properties is obtained. Containing the organic solvent in the base coat agent also improves dispersivity of all sorts of components which are added to prepare a paint composition. As a result, the homogeneity of the base coat agent is improved.

The organic solvent preferably includes alcohols such as methanol, ethanol, propanol, isopropanol, butanol, hexanol, methoxybutanol, and methoxymethylbutanol; esters such as acetate esters and propionate esters of the above-described alcohols; glycols such as ethylene glycol, diethylene glycol, triethylene glycol, polyethylene glycol, propylene glycol, dipropylene glycol, and tripropylene glycol; and ethers such as monomethyl ethers, monoethyl ethers, and monobutyl ethers of the above-described glycols. The organic solvent may contain hydrocarbons such as toluene, xylene, a mineral spirit, and a solvent naphtha. These may be used alone or as a mixture of different types of the organic solvents.

The content of the organic solvent may vary according to the operatiing conditions. However, it is preferable that the content be 10 to 60%, and more preferably 20 to 30%, When the content is outside of the range, it may become difficult to form a thin layer or it may becomes difficult for the metal powder in the base coat to form a laminate structure, and hence it may become difficult to obtain a desired coating depending on the contents of other components.

### (5) Other additives

The base coat agent may contain all sorts of additives conventionally used in a paint composition, according to need. Such additives include a thickener, an anti-rust pigment for controlling rust, and colloidal silica microparticles.

The thickener includes an aliphatic amide, polyamide, polyethylene oxide, and hydroxylpropyl cellulose, and an inorganic thickener such as a silicate series compound.

The anti-rust pigment includes zinc phosphate, magnesium phosphate, zinc molybdate, and aluminum phosphomolybdate.

The colloidal silica microparticle is a fine sol silica particle having a particle size of 1 micrometer or less and has an effect of improving the anticorrosive properties and film strength of the base coat, which is similar to the above-described organic silicon compound. The colloidal silica microparticle includes an organosilica sol, which is a colloidal silica dispersed in an organic solvent (e.g. Snowtex provided by Nissan Chemical Industries, Ltd.), and a fumed silica (gaseous phase silica).

Conventional additives for a paint composition other than the above additives such as a moistening agent and a defoaming agent can be contained in the base coat agent of the present invention.

The total content of these other additives is preferably in the range of 0.1 to 10%. When the content is less than 0.1 %, these additives may not have a positive effect. When the content is more than 10%, the contents of major components such as the metal powder and the binder component become low, and the anticorrosive properties of the base coat which are basic characteristics may be deteriorated.

Each of the above-described components of the base coat agent can comprise one or more compounds.

### (6) Preparation of the Base coat Agent and Method of Manufacturing the Base coat

The base coat agent is prepared by sufficiently mixing the above-described components in order to disperse the metal powder homogeneously.

The substrate to which the base coat is applied can be any member as far as it has a metallic surface. The substrate may be a metallic member, or a composite member made of a metallic material and a resin and/or a ceramic material, of which at least a part of the surface is metallic. The substrate may be a nonmetallic member such as a resin member having at least a part of the surface of the member metalized by a process such as a plating treatment. It is preferable for the substrate to include a ferrous material, such as steel. The surface of the steel member may be processed by a treatment which is extensively used for pre-coating treatment in order to improve adhesion and/or anticorrosive properties, such as shot blasting treatment or phospating treatment. The surface of the steel may be processed by electrolytic plating of zinc or a zinc alloy (such as Zn-Sn, Zn-Fe, and Zn-Ni), hot dip galvanizing of zinc or a zinc alloy, or alloying galvanizing (these are generically referred to below as "zinc series plating".). However, because the combined coat of the present invention has an excellent barrier effect, the anticorrosive properties of the member having the combined coat formed on a bare steel surface are as good as the anticorrosive properties of a member having the combined coat formed on the surface of zinc series plating. Therefore, it is advantageous to paint the bare steel surface when productivity is important.

The shape of the member is not limited in the present invention. Taking steel as an example, the base coat can be applied to members having all sorts of shapes such as that of a steel plate, a steel rod, a steel pipe, a steel beam, a molded steel part, and small parts such as bolts.

Coating the base coat agent on the substrate may be performed by any conventional means such as roll coating, spraying, brush painting, spin coating, and dipping, which mean is selected based on the shape of the member to be coated. The thickness of the base coat is in the range of 5 to 20 micrometers from the viewpoint of achieving a good balance between anticorrosive properties and adhesive properties or secondary workability, and it is especially preferable that the thickness be in the range of 7 to 15 micrometers. The temperature of the base coat agent during this coating process is not particularly limited. The process can normally be performed at room temperature.

The heating process (baking) after the coating process is performed at 200 to 400 degrees C. It is especially preferable that the baking be performed at 250 to 350 degrees C from the viewpoint of proper generation of microcracks. The baking period depends on the thickness of the base coat. Because of the heating process, the organic silicon compound condenses while organic titanium compound works as a hardener or a catalyst, and a coating including a quantity of metal powders is formed on the surface of the substrate.

A preheating process may be performed before the heating process. Because of the preheating process, temperature variation of the coated base coat agent in the successive heating process is reduced, and the possibility of forming a portion where the degree of generation of microcracks is greatly different from other portions is reduced, which contributes to an improvement in anticorrosive properties. Therefore, the preheating process may be effective when it is necessary to improve the quality of the combined coat. It is preferable that the preheating process be performed at 80 to 120 degrees C, and it is especially preferable that the preheating temperature be in the range of 100 to 120 degrees C. The preheating period depends on the thickness of the base coat. When the thickness is in the range of 2 to 30 micrometers, it is preferable that the period be in the range of 5 to 20 minutes. However, because a member having the combined coat without the preheating process exhibits anticorrosive properties which are comparable to those of the combined coating with the preheating process, it is advantageous to reduce the preheating process when a decrease in workability caused by increasing the preheating process is serious.

### 2. Top coat Agent

The top coat agent of the present invention is an aqueous paint composition comprising a silane coupling agent and an alkali-silicate compound, and it optionally includes a small amount of additives such as a wax emulsion.

These components, a method of preparing the top coat agent, and a method of manufacturing a top coat using the top coat agent are described below. In the following description, % with respect to the top coat agent means the percentage by weight based on the whole top coat agent unless otherwise specified.

### (1) Silane Coupling Agent

The silane coupling agent contained in the top coat agent of the present invention functions to harden the top coat agent and to strongly bind the top coat to the base coat by chemically interacting with the metal powder, the organic silicon compound, and the organic titanium compound in the base coat.

A silane coupling agent having an amino group includes 3-aminopropyltriethoxy silane (gamma-APTES), N-(2-aminoethyl) 3-aminopropylmethyldimethoxy silane, N-(2-aminoethyl) 3-aminopropyltrimethoxy silane, N-(2-aminoethyl) 3-aminopropyltriethoxy silane, 3-aminopropyltrimethoxy silane, 3-triethoxysilyl-N-(1,3-dimethylbutylidene) propylamine, and N-phenyl-3-aminopropyltrimethoxy silane.

A silane coupling agent having an isocyatate group includes 3-isocyanatepropyltriethoxy silane.

A silane coupling agent having a mercapto group includes 3-mercaptopropylmethyldimethoxy silane and 3-mercaptopropyltrimethoxy silane.

A silane coupling agent having a vinyl group includes vinyltrichloro silane, vinyltrimethoxy silane, and vinyltriethoxy silane.

A silane coupling agent having a epoxy group includes 2-(3,4-epoxycyclohexyl)ethyltrimethoxy silane, 3-glycidyloxypropyltriethoxy silane, 3-glycidoxypropylmethyldiethoxy silane, and styryl-p-styryltrimethoxy silane.

A silane coupling agent having a metacryloxy group includes 3-methacryloxypropylmethyldimethoxy silane, 3-methacryloxypropyltrimethoxy silane, 3-methacryloxypropylmethyldiethoxy silane, 3-methacryloxypropyltriethoxy silane, and acryloxy-3-acryloxypropyltrimethoxy silane.

A silane coupling agent having a ureido group, a chloropropyl group, and a sulfide group includes 3-ureidopropyltriethoxy silane, 3-chloropropyltrimethoxy silane, and bis(triethoxysilylpropyl)tetrasulfide , respectively.

The silane coupling agent may be a monomer or an oligomer. When it is an oligomer, there is a concern that a molecule having an excessive molecular weight will have a negative effect on infiltration of the top coat agent into microcracks. Therefore, the number of silicon atoms in a molecule is preferably 1 to 10 and especially preferably 1 to 6.

Considering the ability to infiltrate into microcracks formed in the base coat, adhesion to the base coat, and stability of the top coat agent (the pot life) as well as anticorrosive properties, the silane coupling agent contained in the top coat of the present invention preferably has one or more groups selected from a vinyl group, an epoxy group, and a metacryloxy group.

It is particularly preferable to use a glycidyloxy alkyl trialkoxy silane indicated by the following formula (1): 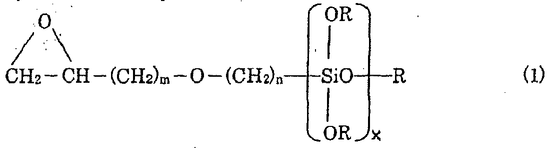 where m is a whole number from 1 to 6, n is 0 or a whole number from 1 to 6, each of the groups R, which may be identical to or different from each other, represents an alkyl group having 1 to 6 carbon atoms, and x is a whole number from 1 to 4.

It is preferable that the glycidyloxy alkyl trialkoxy silane be 3-glycidyloxypropyltrimethoxy silane because it has excellent ability to infiltrate into microcracks, whereby a combined coat having excellent anticorrosive properties is obtained.

The content of the above-described silane coupling agent is 5 to 25%. When the content is less than 5%, the film strength of the top coat decreases. When the agent is added in excess of 25%, the contribution of the top coat to improvement in anticorrosive properties of the combined coat becomes large, and the viscosity of the top coat agent become high, which degrades operability or makes it difficult to form a thin film.

From the viewpoint of achieving a good balance between characteristics of the combined coating and operability, it is preferable that the content of the above-described preferable agents such as a vinyl group be 5 to 20%. When the silane coupling agent is a glycidyloxy alkyl trialkoxy silane indicated by the above formula (1), the content of the agent is preferably 5 to 16%, more preferably 6 to 14%, and especially preferably 7 to 12%.

### (2) Alkali-silicate Compound

An alkali metal of the alkali-silicate compound (alkali-silicate aqueous solution) contained in the top coat of the present invention includes Na, K, and Li. The alkali metal may consist of a single metal or a mixture of different metals in a prescribed proportion.

The content of the alkali-silicate compound is 30 to 60%. When the content of the alkali-silicate compound is less than 30%, the effect of improving anticorrosive properties becomes poor. When the content is more than 60%, there is a tendency for the appearance of the top coat to be severely deteriorated because white powder-like particles come to be found on the surface of the top coat after drying. A preferable range for the content is 35 to 55%, and an especially preferable range is 40 to 50 %.

It is preferable that the ratio of the content of the alkali-silicate compound to the content of the silane coupling agent ([alkali-silicate compound] / [silane coupling agent]) be 2 to 10. When the ratio is more than 10, a defective appearance may be observed as in the case when the alkali-silicate compound is excessive. When the ratio is less than 2, there is a possibility of there being a negative effect on operability because the viscosity of the top coat agent increases. A more preferable range for the ratio is 3 to 8, and it is especially preferable that the ratio be 4 to 7.

The alkali-silicate compound preferably contains a lithium silicate (a lithium silicate aqueous solution). It is preferable that the content of anhydrous silicic acid in lithium silicate be 20% or more. A preferable pH of the silicate is 10 to 12. The ratio of the number of moles of the lithium portion of the lithium-silicate compound in lithium oxide equivalent to the number of moles of the silicon portion of the lithium-silicate compound in silicon oxide equivalent (SiO₂/Li₂O) is preferably in the range of 6 to 10. When the value of SiO₂/Li₂O of the lithium-silicate compound is relatively high like the above-described range, the top coat has superior water resistance compared to the top coat in which the value of SiO₂/Li₂O of the lithium-silicate compound is around 4 to 5, and as a result, the top coat exhibits superior anticorrosive properties because the content of alkali metal ions in the top coat agent is relatively low compared to a top coat agent having a value of SiO₂/Li₂O of around 4 to 5. In addition, a high value of SiO₂/Li₂O promotes a chemical interaction of the top coat agent with an organic silicon compound in the base coat agent. From this viewpoint, the top coat agent having a high value of SiO₂/Li₂O for the lithium-silicate compound can provide a combined coat having superior anticorrosive properties. When the value of SiO₂/Li₂O is 7 to 9, the top coat agent exhibits excellent operability from the viewpoint of pot life.

### (3) Other Additives

The top coat agent of the present invention may contain a wax emulsion in addition to the above-described major components (i.e., the silane coupling agent and the alkali-silicate compound) in order to improve the appearance, lubricity, and water repellency of the top coat. A wax emulsion is a wax which is emulsified to enable it to be dispersed. It includes waxes of vegetable origin such as candelilla wax, carnauba wax, rice wax, and wood wax; animal waxes such as beeswax, lanolin, and whale wax; mineral waxes such as montan wax, ozokerite wax, and ceresin wax; petroleum waxes such as paraffin wax, microcrystalline wax, and petrolatum; synthetic hydrocarbon waxes such as Fischer-Tropsch wax, polyethylene oxide wax, polyethylene wax, and acryl-ethylene copolymer wax; and altered waxes such as a derivative of montan wax, a derivative of paraffin wax, a derivative of microcrystalline wax, and a derivative of hydrogenated ricinus.

The content of the wax emulsion can be set to any value as long as the wax emulsion does not spoil the basic properties that the top coat needs to have. A typical content is 20% or less. A preferable content is 10% or less.

The top coat of the present invention may further contain additives other than the wax emulsion such as a colorant in the form of a pigment and/or a dye, and a surfactant. In the case; it is preferable that the total content of the other additives be 20% or less and it is especially preferable that the total content be 10% or less.

### (4) Solvent

The solvent of the present invention, which is referred to as an "aqueous" solvent, is based on waster. It can contain an organic solvent which is soluble in water as long as the organic solvent does not spoil the basic properties of the present invention as a solvent. The basic properties are, in this case, the ability to dissolve the above-described major component of the top coat agent during storage and during a coating operation. The organic solvent includes alcohols such as methyl alcohol, ethyl alcohol, and isopropyl alcohol.

### (5) Preparation of the Top Coat Agent and Method of Manufacturing the Top Coat

The top coat agent of the present invention is prepared by sufficiently mixing the above-described components. These components can be added to the solvent in any order. A preferable example of preparation comprises mixing a silane coupling agent into an alkali-silicate solution under sufficient stirring conditions and sufficiently stirring the mixture for one hour. From the viewpoint of stability of the solution, the pH of the prepared top coat agent is in the range of 9 to 12, and an acid (e.g., sulfic acid) or an alkali (e.g., sodium hydroxide) is added to adjust the pH to be in this range.

Coating the top coat agent on the substrate may be performed by any conventional method such as roll coating, spraying, brush painting, spin coating, and dipping, with the method being selected depending on the shape of the member to be coated. It is preferable to perform coating so that the thickness of the top coat after the heating process is in the range of 0.05 to 5 micrometers. It is thought that a portion of the top coat agent infiltrates into the base coat and that a region with a varying composition is formed to a thickness of a few micrometers. It is more preferable that the thickness of the top coat be 0.1 to 2.0 micrometers from the viewpoint of achieving a good balance between anticorrosive properties and adhesive properties or secondary workability, and it is especially preferable that the thickness be 0.5 to 1.0 micrometers. The temperature of the top coat agent during this coating process is not particularly limited. The coating process can normally be performed at room temperature.

Because the method of manufacturing the base coat has a heating process as described above, the base coat is hot just after it is formed. When the top coat agent is coated at an excessively high temperature, there is concern of it being difficult to form a uniform coating and of a reaction which is not desirable occurring. Therefore, it is preferable to perform cooling until the temperatures of both the substrate and the base coat are 50 degrees C or less. It is especially preferable that the temperature be 40 degrees C or less.

The heating process (baking) after the coating process is performed at 50 to 200 degrees C. It is especially preferable that the baking be performed at 100 degrees C or more from the viewpoint of effective vaporizing of water which is a residual solvent. The baking period depends on the thickness of the top coat. When the thickness is in the range of 0.05 to 5 micrometers, it is preferable that the period be 10 to 120 minutes.

### Example 1

Although the present invention will be concretely described below with respect to examples, the invention should not be considered as being in any way limited to these examples.

### 1. Preparation of the Base coat

A scale-like zinc powder was first prepared by the following process 100 parts by weight of zinc metal powder were dispersed in 200 parts of a mineral spirit, and a small amount of an aliphatic acid was added to form a slurry containing the zinc metal powder, the content of which in the slurry was around 30% by weight. Comminution of the slurry was performed using a bead mill (ZRS, manufactured by Ashizawa Finetech Ltd.), after which the processed slurry was dried under a vacuum, and a scale-like zinc powder was obtained having a median length of the major axis of 10 micrometers and a median thickness of 0.3 micrometers. ALPASTE (average length of 10 micrometers, average thickness of 0.2 micrometers), which is a product of Toyo Aluminium K.K., was used as a scale-like aluminum powder.

Paint compositions A and B having the formulations (part by weight) shown in Table 1 were prepared by mixing each component for three hours with a high-speed stirring machine for paint.

Each paint composition was coated using a bar coater on a mild steel plate which was degreased and rinsed in advance, and heating at 280 degrees C for 30 minutes was performed on the steel plate on which the paint composition was coated. A base coat having a thickness of 10 micrometers was thereby formed.

Details of each of the raw materials of the base coat agent is as follows:
Lithium silicate: Lithium silicate 75, which is a product of Nissan Chemical Industries, LTD.
Titanium ethylacetoacetate: Orgatics TC-750, which is a product of Matsumoto Fine Chemical Co., LTD.
Polymer of tetrabutoxy titanium: TBT polymer B-10, which is a product of Nippon Soda Co., LTD.

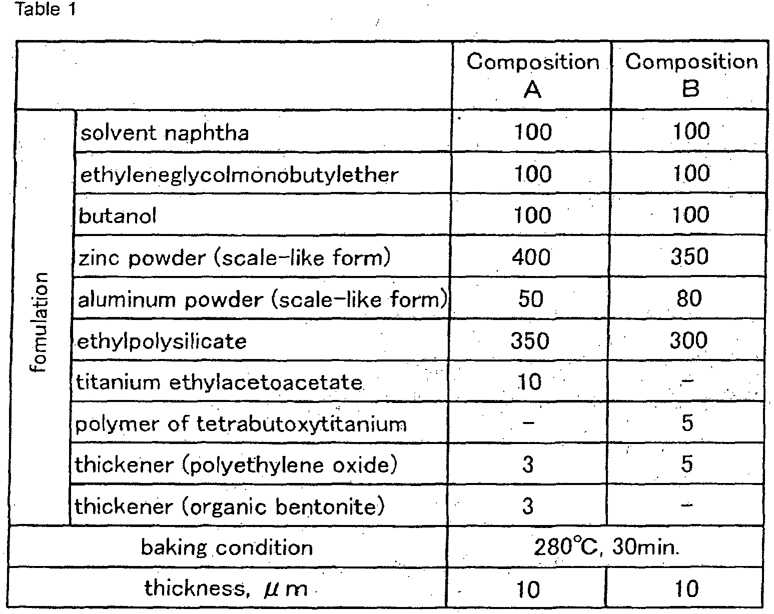

### 2. Preparation of Top coat

According to the formulation (parts by weight) shown in Table 2, paint compositions a to g was prepared by adding a silane coupling agent and other components into a lithium silicate solution while performing a sufficient stirring followed by additional sufficient stirring for one hour.

Each paint composition was coated using a bar coater on a steel plate on which the base coat was previously formed and cooled to room temperature (25 degrees C) in advance, and was coated on a steel plate on which electrolytic zinc plating was performed after a pretreatment which was the same as the treatment performed on the steel plate on which the base coat was formed. Heating at 100 degrees C for 20 minutes was performed on each coated steel plate, and a top coat having a thickness of 0.5 micrometers was formed on each steel plate.

Detailed information on each raw material of the top coat agent is as follows:
Lithium silicate: Lithium silicate 75, which is a product of Nissan Chemical Industries, LTD.
3-glycidyloxypropyltrimethoxy silane: Orgatics A187, which is a product of Nippon Unicar Company Limited.
Wax emulsion: Polygen WE6, which is a product of BASF Japan Ltd.

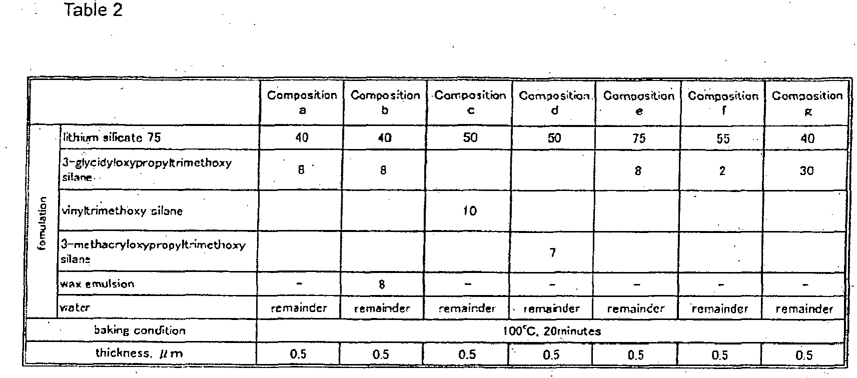

### 3. Means for evaluation

### (1) Test of anticorrosive properties

In order to evaluate the anticorrosive properties of each of the steel plates having the combined coats consisting of the above base coats and top coats, a test based on CCT (Combined Cyclic corrosion Test) defined by JAMO M609 was performed and the number of cycles of the CCT until red rust was generated on the plate was measured as an evaluation criterion.

The conditions of the test were as follows:
(A) Salt spraying
   Temperature: 35 degrees C plus or minus 1 degree C
   Salt content: 5% plus or minus 0.5%
   Other conditions: pursuant to JIS Z 2371
(B) Drying
   Temperature: 60 degrees C plus or minus 1 degree C
   Humidity: 20 to 30% RH
(C) Wetting
   Temperature: 50 degrees C plus or minus 1 degree C
   Humidity: 95% RH or more
(D) Period of cycle
   Salt spraying: 2 hours
   Drying: 4 hours
   Wetting: 2 hours
   Each period included a transition period (i.e., a period to reach a prescribed temperature and humidity after changing conditions).
(E) Transition period
   From salt spraying to drying: at most 30 minutes
   From drying to wetting: at most 15 minutes
   From wetting to salt spraying: at most 30 minutes (normally this period was a short time.)
(F) Angle of a test piece
   Basically a test piece is held so that its surface to be tested is inclined from the vertical by 15 to 20 degrees.

### (2) Characteristics of the Top Coat

Each top coat agent was observed and evaluated as good (O) when the viscosity of the top coat was not high and no adverse effect on operability was observed, or as bad (x) when the viscosity was high and an adverse effect on operability was observed.

### (33) Appearance of the Top Coat

The appearance of each top coat was investigated with the naked eye, and evaluated as good (○) when the finish of the top coat was good, or as bad (×) when the finish was not good because, for example, white powdery particles were observed.

### 4. Result

The results of the evaluation are shown in Table 3.

**Table 3**

| | Example 1 | Example 2 | Examples 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| basecoat agent etc. | A | B | B | A | A | A | A | A | A | electrolytic zinc plating |
| thickness of basecoat etc. (*µ*m) | 10 | 10 | 10 | 10 | 10 | 10 | 10 | 10 | 10 | 10 |
| topcoat agent etc. | a | a | b | c | d | e | f | g | - | a |
| thickness of basecoat (*µ*m) | 0.5 | 0.5 | 0.5 | 0.5 | 0.5 | 0.5 | 0.5 | 0.5 | 0 | 0.5 |
| cycle numbers of CCT | 400 | 410 | 405 | 390 | 360 | 405 | 300 | 320 | 200 | 100 |
| characteristics of topcoat agent | ○ | ○ | ○ | ○ | ○ | ○ | ○ | × | - | ○ |
| appearance of topcoat | ○ | ○ | ○ | ○ | ○ | × | × | ○ | - ○ | ○ |

As shown in Table 3, it was observed that the anticorrosive properties of the combined coat comprising a top coat formed from a top coat agent having the formulation according to the present invention were almost twice as good as the anticorrosive properties of a coating solely consisting of a base coat, namely, a coating without a top coat (Comparative Example 4). It was also observed that the anticorrosive properties of the combined coat were 3.5 to 4 times as good as the anticorrosive properties of the coating having electrolytic zinc plating instead of a base coat (Comparative Example 5).

From a comparison between Examples 1 to 3 and Comparative Examples 1 to 3, it can be seen that, when the content of the lithium-silicate compound in the top coat agent is too high (Comparative Example 1), the appearance of the top coat is deteriorated, although the anticorrosive properties are excellent.

It can be seen that, when the content of the lithium-silicate compound in the top coat agent is too small (Comparative Example 2), the combined coating formed from the top coat agent exhibits almost 1.5 times as good anticorrosive properties as a coating solely consisting of the base coat, and that the appearance of the top coat is deteriorated.

It can be seen that, when the content of the silane coupling compound in the top coat agent is too high (Comparative Example 3), the combined coating formed from the top coat agent exhibits almost 1.5 times as good anticorrosive properties as a coating solely consisting of the base coat, and that the operability of the top coat agent is deteriorated due to an increase in viscosity.

## Claims

1. A member having anticorrosive coatings **characterized in that** the coatings comprise:
- a first coating formed from a first paint composition on a metallic surface of a member by heating, having a thickness after heating process in the range of 5 to 20 micrometers, the first paint composition comprising, based on the whole composition, 10 to 35 % by weight of an organic silicon compound comprising one or more compounds selected from the group consisting of a tetraalkoxy silane compound and a hydrolysate compound of the silane compound, 0.05 to 2.0% by weight of an organic titanium compound, 30 to 50% by weight of one or more metal powders selected from the group consisting of zinc powder, zinc alloy powder, and aluminum powder, wherein the metal powder has a scale-like form where the metal powder has an average thickness of the scale-like form of 0.05 to 5 µm and an average length of the major axis of 0.5 to 100 µm, and 10 to 60% by weight of an organic solvent; and
- a second coating formed from a second paint composition on a surface of the first coating by heating, the second paint composition being aqueous and comprising, based on the whole composition, 5 to 25 % by weight of a silane coupling agent and 30 to 60% by weight of an alkali-silicate compound.

2. The member according to claim 1, wherein the organic silicon compound in the first paint composition comprises one or more compounds selected from the group consisting of a tetraalkyl silicate compound having an alkyl functional group having 1 to 3 carbon atoms, and an oligomer thereof.

3. The member according to claim 1 or 2, wherein the organic titanium compound of the first paint composition comprises a compound having a generic formula of Ti(X)₄ and an oligomer thereof, where X represents one or more functional groups selected from the group consisting of alkoxy groups having 1 to 4 carbon atoms including methoxy, ethoxy, propoxy, isopropoxy, butoxy, isobutoxy, and tert-butoxy; chelating groups including lactate, triethanolaminate, acetylacetonate, acetoacetate, and ethylacetoacetate; and a hydroxy group.

4. The member according to one of claims 1 to 3, wherein the second paint composition includes a wax emulsion having a content of 20% or less by weight based on the whole composition.

5. The member according to one of claims 1 to 4, wherein the silane coupling agent of the second paint composition has one or more functional group selected from the group consisting of a vinyl group, an epoxy group, and a methacryloxy group.

6. The member according to claim 5, wherein the silane coupling agent of the second paint composition is a glycidyloxyalkyltrialkoxy silane.

7. The member according to one of claims 1 to 5, wherein the alkali-silicate compound of the second paint composition is a lithium-silicate compound and the ratio of the number of moles of a lithium portion of the lithium-silicate compound in lithium oxide equivalent to the number of moles of a silicon portion of the lithium-silicate compound in silicon oxide equivalent (SiO₂/Li₂O) is 6 to 10.

8. The member according to one of claims 1 to 7, wherein the surface on which the first coating is formed is a surface of a steel member.

9. A method of manufacturing a member having an anticorrosive coating, **characterized by** comprising:
- a first coating process of coating a first paint composition on a metallic surface of a member, the first paint composition comprising, based on the whole composition, 10 to 35 % by weight of an organic silicon compound comprising one or more compounds selected from the group consisting of a tetraalkoxy silane compound and a hydrolysate compound of the silane compound, 0.05 to 2.0% by weight of an organic titanium compound, 30 to 50% by weight of one or more metal powders selected from the group consisting of zinc powder, zinc alloy powder, and aluminum powder, wherein the metal powder has a scale-like form where the metal powder has an average thickness of the scale-like form of 0.05 to 5 µm and an average length of the major axis of 0.5 to 100 µm, and 10 to 60% by weight of an organic solvent;
- a first heating process of heating the coated first paint composition at 200 to 400 degrees C to form a first coating; the first coating having a thickness after heating process in the range of 5 to 20 micrometers ;
- a second coating process of coating a second paint composition on a surface of the first coating, the second paint composition being aqueous and comprising, based on the whole composition, 5 to 25 % by weight of a silane coupling agent and 30 to 60% by weight of an alkali-silicate compound; and
- a second heating process of heating the coated second paint composition at 50 to 200 degrees C to form a second coating.

10. The method according to claim 9, wherein the organic silicon compound in the first paint composition comprises one or more compounds selected from the group consisting of a tetraalkyl silicate compound having an alkyl functional group having 1 to 3 carbon atoms, and an oligomer thereof.

11. The method according to claim 9 or 10, wherein the organic titanium compound of the first paint composition comprises a compound having a generic formula of Ti(X)₄ and an oligomer thereof, where X represents one or more functional groups selected from the group consisting of alkoxy groups having 1 to 4 carbon atoms including methoxy, ethoxy, propoxy, isopropoxy, butoxy, isobutoxy, and tert-butoxy; chelating groups including lactate, triethanolaminate, acetylacetonate, acetoacetate, and ethylacetoacetate; and a hydroxy group.

12. The method according to one of claims 9 to 11, wherein the second paint composition includes a wax emulsion having a content of 20% or less by weight based on the whole composition.

13. The method according to one of claims 9 to 12, wherein the silane coupling agent of the second paint composition has one or more functional groups selected from the group consisting of a vinyl group, an epoxy group, and a methacryloxy group.

14. The method according to claim 13, wherein the silane coupling agent of the second paint composition is a glycidyloxyalkyltrialkoxy silane.

15. The method according to one of claims 9 to 14, wherein the alkali-silicate compound of the second paint composition is a lithium-silicate compound and the ratio of the number of moles of a lithium portion of the lithium-silicate compound in lithium oxide equivalent to the number of moles of a silicon portion of the lithium-silicate compound in silicon oxide equivalent (SO₂/Li₂O) is 6 to 10.

16. The method according to one of claims 9 to 15, wherein the method comprises a preheating process comprising heating the coated first paint composition at 80 to 200 degrees C between the first coating process and the first heating process.

17. The method according to one of claims 9 to 16, wherein the surface on which the first coating is formed is a surface of a steel member.

## Patentansprüche

1. Element, welches korrosionshemmende Beschichtungen aufweist, **dadurch gekennzeichnet, daß** die Beschichtungen umfassen:
- eine erste Beschichtung, die aus einer ersten Anstrichfarbenzusammensetzung auf einer metallischen Oberfläche eines Elements durch Erwärmen gebildet ist, mit einer Dicke nach dem Erwärmungsverfahren im Bereich von 5 bis 20 Mikrometern, wobei die erste Anstrichfarbenzusammensetzung basierend auf der gesamten Zusammensetzung 10 bis 35 Gew.-% einer organischen Siliciumverbindung, umfassend eine oder mehrere Verbindungen, ausgewählt aus der Gruppe, bestehend aus einer Tetralkoxysilanverbindung und einer Hydrolysat-Verbindung der Silanverbindung, 0,05 bis 2,0 Gew.-% einer organischen Titanverbindung, 30 bis 50 Gew.-% von einem oder mehreren Metallpulvern, ausgewählt aus der Gruppe, bestehend aus Zinkpulver, Zinklegierungspulver und Aluminiumpulver, wobei das Metallpulver eine schuppenartige Form aufweist, wobei das Metallpulver eine durchschnittliche Dicke der schuppenartigen Form von 0,05 bis 5 µm und eine durchschnittliche Länge der Hauptachse von 0,5 bis 100 µm aufweist, und 10 bis 60 Gew.-% eines organischen Lösemittels umfaßt, und
- eine zweite Beschichtung, die aus einer zweiten Anstrichfarbenzusammensetzung auf einer Oberfläche der ersten Beschichtung durch Erwärmen gebildet ist, wobei die zweite Anstrichfarbenzusammensetzung wässrig ist und basierend auf der gesamten Zusammensetzung 5 bis 25 Gew.-% eines Silan-Kopplungsmittels und 30 bis 60 Gew.-% einer Alkalisilicat-Verbindung umfaßt.

2. Element nach Anspruch 1, wobei die organische Siliciumverbindung in der ersten Anstrichfarbenzusammensetzung eine oder mehrere Verbindungen, ausgewählt aus der Gruppe, bestehend aus einer Tetraalkylsilicat-Verbindung mit einer Alkyl-funktionellen Gruppe mit 1 bis 3 Kohlenstoffatomen und einem Oligomer davon umfaßt.

3. Element nach Anspruch 1 oder 2, wobei die organische Titanverbindung der ersten Anstrichfarbenzusammensetzung eine Verbindung mit einer Summenformel von Ti(X)₄ und ein Oligomer davon umfaßt, wobei X für eine oder mehrere funktionelle Gruppen, ausgewählt aus der Gruppe, bestehend aus Alkoxygruppen mit 1 bis 4 Kohlenstoffatomen, einschließlich Methoxy, Ethoxy, Propoxy, Isopropoxy, Butoxy, Isobutoxy und tert.-Butoxy, chelatbildenden Gruppen, einschließlich Lactat, Triethanolaminat, Acetylacetonat, Acetoacetat und Ethylacetoacetat, und einer Hydroxygruppe, steht.

4. Element nach einem der Ansprüche 1 bis 3, wobei die zweite Anstrichfarbenzusammensetzung eine Wachsemulsion mit einem Gehalt von 20 Gew.-% oder weniger, basierend auf der gesamten Zusammensetzung, umfaßt.

5. Element nach einem der Ansprüche 1 bis 4, wobei das Silan-Kopplungsmittel der zweiten Anstrichfarbenzusammensetzung eine oder mehrere funktionelle Gruppen, ausgewählt aus der Gruppe, bestehend aus einer Vinylgruppe, einer Epoxygruppe und einer Metacryloxygruppe, aufweist.

6. Element nach Anspruch 5, wobei das Silan-Kopplungsmittel der zweiten Anstrichfarbenzusammensetzung ein Glycidyloxyalkyltrialkoxysilan ist.

7. Element nach einem der Ansprüche 1 bis 5, wobei die Alkalisilicat-Verbindung der zweiten Anstrichfarbenzusammensetzung eine Lithiumsilicat-Verbindung ist und das Verhältnis der Anzahl von Molen eines Lithium-Anteils der Lithiumsilicat-Verbindung in Lithiumoxid-Äquivalent zu der Anzahl von Molen eines Silicium-Anteils der Lithiumsilicat-Verbindung in Siliciumoxid-Äquivalent (SiO₂/Li₂O) 6 bis 10 beträgt.

8. Element nach einem der Ansprüche 1 bis 7, wobei die Oberfläche, auf welcher die erste Beschichtung gebildet ist, eine Oberfläche eines Stahlelements ist.

9. Verfahren zum Herstellen eines Elements, welches eine korrosionshemmende Beschichtung aufweist, **dadurch gekennzeichnet, daß** es umfaßt:
- ein erstes Beschichtungsverfahren eines Aufbringens einer ersten Anstrichfarbenzusammensetzung als Beschichtung auf einer metallischen Oberfläche eines Elements, wobei die erste Anstrichfarbenzusammensetzung basierend auf der gesamten Zusammensetzung 10 bis 35 Gew.-% einer organischen Siliciumverbindung, umfassend eine oder mehrere Verbindungen, ausgewählt aus der Gruppe, bestehend aus einer Tetraalkoxysilanverbindung und einer Hydrolysat-Verbindung der Silanverbindung, 0,05 bis 2,0 Gew.-% einer organischen Titanverbindung, 30 bis 50 Gew.-% von einem oder mehreren Metallpulvern, ausgewählt aus der Gruppe, bestehend aus Zinkpulver, Zinklegierungspulver und Aluminiumpulver, wobei das Metallpulver eine schuppehnartige Form aufweist, wobei das Metallpulver eine durchschnittliche Dicke der schuppenartigen Form von 0,05 bis 5 µm und eine durchschnittliche Länge der Hauptachse von 0,5 bis 100 µm aufweist, und 10 bis 60 Gew.-% eines organischen Lösemittels umfaßt;
- ein erstes Erwärmungsverfahren eines Erwärmens der als Beschichtung aufgebrachten ersten Anstrichfarbenzusammensetzung bis 200 bis 400°C, um eine erste Beschichtung zu bilden, wobei die erste Beschichtung eine Dicke nach dem Erwärmungsverfahren im Bereich von 5 bis 20 Mikrometern aufweist;
- ein zweites Beschichtungsverfahren eines Aufbringens einer zweiten Anstrichfarbenzusammensetzung als Beschichtung auf einer Oberfläche der ersten Beschichtung, wobei die zweite Anstrichfarbenzusammensetzung wässrig ist und basierend auf der gesamten Zusammensetzung 5 bis 25 Gew.-% eines Silan-Kopplungsmittels und 30 bis 60 Gew.-% einer Alkalisilicat-Verbindung umfaßt; und
- ein zweites Erwärmungsverfahren eines Erwärmens der als Beschichtung aufgebrachten zweiten Anstrichfarbenzusammensetzung bei 50 bis 200°C, um eine zweite Beschichtung zu bilden.

10. Verfahren nach Anspruch 9, wobei die organische Siliciumverbindung in der ersten Anstrichfarbenzusammensetzung eine oder mehrere Verbindungen, ausgewählt aus der Gruppe, bestehend aus einer Tetraalkylsilicat-Verbindung mit einer Alkyl-funktionellen Gruppe mit 1 bis 3 Kohlenstoffatomen und einem Oligomer davon, umfaßt.

11. Verfahren nach Anspruch 9 oder 10, wobei die organische Titanverbindung der ersten Anstrichfarbenzusammensetzung eine Verbindung mit einer Summenformel von Ti(X)₄ und ein Oligomer davon umfaßt, wobei X für eine oder mehrere funktionelle Gruppen, ausgewählt aus der Gruppe, bestehend aus Alkoxygruppen mit 1 bis 4 Kohlenstoffatomen, einschließlich Methoxy, Ethoxy, Propoxy, Isopropoxy, Butoxy, Isobutoxy und tert.-Butoxy, chelatbildenden Gruppen, einschließlich Lactat, Triethanolaminat, Acetylacetonat, Acetoacetat und Ethylacetoacetat, und einer Hydroxygruppe, steht.

12. Verfahren nach einem der Ansprüche 9 bis 11, wobei die zweite Anstrichfarbenzusammensetzung eine Wachsemulsion mit einem Gehalt von 20 Gew.-% oder weniger, basierend auf der gesamten Zusammensetzung, umfaßt.

13. Verfahren nach einem der Ansprüche 9 bis 12, wobei das Silan-Kopplungsmittel der zweiten Anstrichfarbenzusammensetzung eine oder mehrere funktionelle Gruppen, ausgewählt aus der Gruppe, bestehend aus einer Vinylgruppe, einer Epoxygruppe und einer Metacryloxygruppe, aufweist.

14. Verfahren nach Anspruch 13, wobei das Silan-Kopplungsmittel der zweiten Anstrichfarbenzusammensetzung ein Glycidyloxyalkyltrialkoxysilan ist.

15. Verfahren nach einem der Ansprüche 9 bis 14, wobei die Alkalisilicat-Verbindung der zweiten Anstrichfarbenzusammensetzung eine Lithiumsilicat-Verbindung ist und das Verhältnis der Anzahl von Molen eines Lithium-Anteils der Lithiumsilicat-Verbindung in Lithiumoxid-Äquivalent zu der Anzahl von Molen eines Silicum-Anteils der Lithiumsilicat-Verbindung in Siliciumoxid-Äquivalent (SiO₂/Li₂O) 6 bis 10 beträgt.

16. Verfahren nach einem der Ansprüche 9 bis 15, wobei das Verfahren ein Vorerwärmungsverfahren, welches umfaßt, die als Beschichtung aufgebrachte erste Anstrichfarbenzusammensetzung bei 80 bis 200°C zwischen dem ersten Beschichtungsverfahren und dem ersten Erwärmungsverfahren zu erwärmen, umfaßt.

17. Verfahren nach einem der Ansprüche 9 bis 16, wobei die Oberfläche, auf welcher die erste Beschichtung gebildet wird, eine Oberfläche eines Stahlelements ist.

## Revendications

1. Elément comportant des revêtements anticorrosion **caractérisé en ce que** les revêtements comprennent:
- un premier revêtements formé à partir d'une première composition de peinture sur une surface métallique d'un élément par chauffage, ayant une épaisseur après le procédé de chauffage dans la plage de 5 à 20 micromètres, la première composition de peinture comprenant, par rapport à la composition totale, 10 à 35 % en poids d'un composé organique à base de silicium comprenant un ou plusieurs composés choisis dans le groupe constitué d'un composé tétraalcoxysilane et d'un composé hydrolysat du composé silane, 0,05 à 2,0 % en poids d'un composé organique à base de titane, 30 à 50 % en poids d'une ou plusieurs poudres métalliques choisies dans le groupe constitué de la poudra de zinc, de la poudre d'alliage à base de zinc et de la poudre d'aluminium, dans lequel la poudre métallique a une forme en écaille où la poudre métallique a une épaisseur moyenne de la forme en écaille des 0,05 à 5 µm et une longeur moyenne du grand axe de 0,5 à 100 µm, et 10 à 60 % en poids d'un solvant organique; et
- un deuxième revêtement formé à partir d'une deuxième composition de peinture sur une surface de premier revêtement par chauffage, la deuxième composition de peinture étant aqueuse et comprenant, par rapport à la composition totale, 5 à 25 % en poids d'un agent de couplage au silane et 30 à 60 % en poids d'un composé de silicate alcalin.

2. Élément selon la revendication 1, dans lequel le composé organique à base de silicium de la première composition de peinture comprend un ou plusieurs composés choisis dans le groupe constitué d'un composé de tétraalkylsilicate comprenant un groupe fonctionnel alkyle comportant de 1 à 3 atomes de carbone, et un oligomère de celui-ci.

3. Élément selon la revendication 1 ou 2, dans lequel le composé organique à base de titane de la première composition de peinture comprend un composé ayant und formule générique de Ti(X)₄ et un oligomère de celui-ci, où X représente un ou plusieurs groupes fonctionnels choisis dans le groupe constitué des groupes alcoxy comportant de 1 à 4 atomes de carbone comprenant les groupes méthoxy, éthoxy, propoxy, isopropoxy, butoxy, isobutoxy, et tert-butoxy; des groupes chélants comprenant le lactate, le triéthanolaminate, l'acétylacétonate, l'acétoacétate et l'éthylacétoacétate; et d'un groupe hydroxy.

4. Élément selon l'une quelconque des revendications 1 à 3, dans lequel la deuxième composition de peinture comprend une émulsion de cire ayant une teneur de 20 % ou moins en poids par rapport à la composition totale.

5. Élément selon l'une quelconque des revendications 1 à 4, dans lequel l'agent de couplage au silane de la deuxième composition de peinture comprend un ou plusieurs groupes fonctionnels choisis dans le groupe constitué d'un groupe vinyle, d'un groupe époxy et d'un groupe méthacryloxy.

6. Élément selon la revendication 5, dans lequel l'agent de couplage au silane de la deuxième composition de peinture est un glycidyloxyalkyltrialcoxysilane.

7. Élément selon l'une quelconque des revendications 1 à 5, dans lequel le composé de silicate alcalin de la deuxième composition de peinture est un composé de lithium-silicate et le rapport entre le nombre de moles d'une partie contenant du lithium du composé de lithium-silicate en l'équivalent oxyde de lithium au nombre de moles d'une partie contenant du silicium du composé de lithium-silicate en l'équivalent oxydes de silicium (SiO₂/Li₂O) est de 6 à 10.

8. Élément selon l'une quelconque des revendications 1 à 7, dans lequel la surface sur laquelle le premier revêtement est formé est uns surface d'un élément en acier.

9. Procédé de fabrication d'un élément comportant un revêtement anticorrosion, **caractérisé par le fait qu'**il comprend:
- un premier procédé de revêtement consistant à appliquer une première composition de peinture sur une surface métallique d'un élément, la première composition de peinture comprenant, par rapport à la composition totale, 10 à 35 % en poids d'un composé organique à base de silicium comprenant un ou plusieurs composés choisis dans le groupe constitué d'un composé tétraalcoxysilane et d'un composé hydrolysat du composé silane, 0,05 à 2,0 % en poids d'un composé organique à base de titane, 30 à 50 % en poids d'une ou plusieurs poudres métalliques choisies dans la groupe constitué de la poudre de zinc, de la poudre d'alliage à base de zinc et de la poudre d'aluminium, dans lequel la poudre métallique a une forme en écaille où la poudre métallique a une épaisseur moyenne de la forme en écaille de 0,05 à 5 µm et une longueur moyenne du grand axe de 0,5 à 100 µm, et 10 à 60 % en poids d'un solvant organique;
- un premier procédé de chauffage consistant à chauffer la première composition de peinture appliquée à une température de 200 à 400 degrés C pour former un premier revêtement; le premier revêtement ayant une épaisseur après le procédé de chauffage dans la plage de 5 à 20 micromètres;
- un deuxième procédé de revêtement consistant à appliquer und deuxième composition de peinture sur une surface du premier revêtement, le deuxième composition de peinture étant aqueuse et comprenant, par rapport à la composition totale, 5 à 25 % en poids d'un agent de couplage au silane et 30 à 60 % en poids d'un composé de silicate alcalin; et
- un deuxième procédé de chauffage consistant à chauffer la deuxième composition de peinture appliquée à une température de 50 à 200 degrés C pour former un deuxième revêtement.

10. Procédé selon la revendication 9, dans lequel le composé organique à base de silicium de la première composition de peinture comprend un ou plusieurs composés choisis dans le groupe constitué d'un composé de tétraalkylsilicate comprenant un groupe fonctionnel alkyle comportant de 1 à 3 atomes de carbone, et un oligomère de celui-ci.

11. Procédé selon la revendication 9 ou 10, dans lequel le composé organique à base de titane de la première composition de peinture comprend un composé ayant une formule générique de Ti(X)₄ et un oligomère de celui-ci, où X représente un ou plusieurs groupes fonctionnels choisis dans le groupe constitué des groupes alcoxy comportant de 1 à 4 atomes de carbone comprenant les groupes méthoxy, éthoxy, propoxy, isopropoxy, butoxy, isobutoxy, et tert-butoxy; des groupes chélants comprenant la lactate, le triéthanolaminate, l'acétylacétonate, l'acétoacétate et l'éthylacétoacétate; et d'un groupe hydroxy.

12. Procédé selon l'une quelconque des revendications 9 à 11, dans lequel la deuxième composition de peinture comprend une émulsion de cire ayant une teneur de 20 % ou moins en poids par rapport à la composition totale.

13. Procédé selon l'une quelconque des revendications 9 à 12, dans lequel l'agent de couplage au silane de la deuxième composition de peinture comprend un ou plusieurs groupes fonctionnels choisis dans le groupe constitué d'un groupe vinyle, d'un groupe époxy et d'un groupe méthacryloxy.

14. Procédé selon la revendication 13, dans lequel l'agent de couplage au silane de la deuxième composition de peinture est un glycidyloxyalkyltrialcoxysilane.

15. Procédé selon l'une quelconque des revendications 9 à 14, dans lequel le composé de silicate alcalin de la deuxième composition de peinture est un composé de lithium-silicate et le rapport entre le nombre de moles d'une partie contenant du lithium du composé de lithium-silicate en l'équivalent oxyde de lithium au nombre de moles d'une partie contenant du silicium du composé de lithium-silicate en l'équivalent oxyde de silicium (SO₂/Li₂O) est de 6 à 10.

16. Procédé selon l'une quelconque des revendications 9 à 15, dans lequel le procédé de préchauffage comprenant le chauffage de la première composition de peinture appliquée à une température de 80 à 200 degrés C entre le premier procédé de revêtement et le premier procédé de chauffage.

17. Procédé selon l'une quelconque des revendications 9 à 16, dans lequel la surface sur laquelle le premier revêtement est formé est une surface d'un élément en acier.
